(19) Europäisches Patentamt
European Patent Office
Office européen des brevets

(11) **EP 4 567 469 A1**

(12) **EUROPEAN PATENT APPLICATION**
published in accordance with Art. 153(4) EPC

(43) Date of publication:
**11.06.2025 Bulletin 2025/24**

(21) Application number: **23850041.7**

(22) Date of filing: **31.07.2023**

(51) International Patent Classification (IPC):
**G01S 17/86** (2020.01)   **G01C 3/06** (2006.01)

(52) Cooperative Patent Classification (CPC):
**G01C 3/06; G01S 17/86; G01S 17/894**

(86) International application number:
**PCT/JP2023/027937**

(87) International publication number:
**WO 2024/029486 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.08.2022 JP 2022124738**

(71) Applicant: **DENSO WAVE INCORPORATED**
**Agui-cho**
**Chita-gun, Aichi 470-2297 (JP)**

(72) Inventor: **MITANI, Yusuke**
**Chita-gun, Aichi 470-2297 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **DISTANCE MEASUREMENT DEVICE**

(57) A distance measuring apparatus measures TOF measurement distance on the basis of a first time difference between a first light emission timing of a first light emission pulse and a first light reception timing of a first light reception pulse, identifies a group of a plurality of light projecting elements that emits a second light emission pulse at a second light emission timing where a second time difference between the first light reception timing and a second light reception timing of a second light reception pulse matches a time difference between the first light emission timing and the second light emission timing of the second light emission pulse, measures stereo measurement distance on the basis of a light projection angle of the identified group of the plurality of light projecting elements and a light reception angle of a group of a plurality of light receiving elements, outputs the TOF measurement distance in a case where reference measurement distance is greater than or equal to a predetermined threshold, and otherwise outputs the stereo measurement distance.

FIG.7

## Description

Technical Field

The present disclosure relates to a distance measuring apparatus.

Background Art

A conventional apparatus irradiates a measurement target region with light and uses reflection light received from an object in the region to measure the distance to the object. An example of the apparatus includes an optical distance measuring apparatus that uses the time elapsed from the irradiation of the object with light to the detection of the reflection light, that is, the time of flight (TOF) of light which makes a round trip between the apparatus and the object. For example, an optical distance measuring sensor disclosed in PTL 1 below has been known as technology related to such an optical distance measuring apparatus. This optical distance measuring sensor adopts single photon avalanche diodes (SPADs) as light receiving elements. When a combined signal of a plurality of output signals output from the plurality of respective SPADs reaches a predetermined threshold or more, a detection signal is generated. The measurement period between this generation timing and a detection start timing is measured. A plurality of timings at which the plurality of SPADs reacts in light projection and light reception performed one time is then obtained by further taking into consideration timing information about the timing at which the combined signal increases. The time of flight is calculated by using predetermined statistical processing on the basis of the time between each of the plurality of timings and the detection start timing, and the measurement time. The distance is calculated on the basis of the calculated time of flight.

Citation List

Patent Literature

PTL 1: JP 2019-158737 A

Summary of the Invention

Incidentally, in a TOF measurement method in which a plurality of SPADs is used, distance is calculated on the basis of the speed of traveling light. The speed of traveling light is sufficiently high and it is thus difficult to increase the distance measurement precision. For example, even in the case of a sampling interval of 1 GHz, the limit of the distance measurement precision is about 15 cm each way. In addition, the application of a higher sampling frequency is possible in sampling for a SPAD alone in the research phase. It is, however, difficult to apply the similar high sampling frequency, for example, for a plurality of SPADs disposed in an array. The sampling frequency restriction is therefore a main factor to determine distance resolution in a distance measuring sensor in the TOF measurement method that adopts a plurality of SPADs. In other words, whether measurement distance is long or short, the distance resolution is substantially constant. Meanwhile, it is difficult to increase the distance resolution in a case where measurement distance is short distance less than predetermined distance. The distance resolution has greater influence on a relative error in measurement distance in the case of short distance than in the case of long distance in which the measurement distance is greater than or equal to the predetermined distance. Meanwhile, it is preferable to avoid the increasing cost of the distance measuring apparatus.

The present disclosure has been devised to solve the problem described above. An object of the present disclosure is to provide a distance measuring apparatus that makes it possible to reduce cost while increasing distance resolution in the case of short distance in which measurement distance is less than predetermined distance without decreasing distance resolution in the case of long distance in which the measurement distance is greater than or equal to the predetermined distance.

A distance measuring apparatus according to an embodiment of the present disclosure includes: a plurality of light projecting elements configured to project respective light emission pulses to a target region; a plurality of light receiving elements configured to receive, as a plurality of light reception pulses, a plurality of the respective light emission pulses transmitted by the plurality of light projecting elements and reflected by an object in the measurement target region; a control unit configured to control the plurality of light projecting elements; and a measuring unit configured to perform distance measurement in the measurement target region on the basis of the plurality of light reception pulses received by the plurality of light receiving elements. The control unit is configured to cause the plurality of respective light projecting elements to emit first light emission pulses at first light emission timings and then cause the plurality of respective light projecting elements to emit second light emission pulses at second light emission timings, the first light emission timings are identical for all the plurality of light projecting elements, and the second light emission timings are different between groups each including at least one of the plurality of light projecting elements. The measuring unit is configured to, for each of the groups of the plurality of light receiving elements, (a) measure a first time difference between the first light emission timing and a first light reception timing, the group of the plurality of light receiving elements receiving a first light reception pulse corresponding to the first light emission pulse at the first light reception timing, (b) measure a second time difference between the first light reception timing and a second light reception timing, the group of the plurality of light receiving elements receiving a second light reception pulse corresponding to the second light emission pulse at the second light reception timing, (c) measure time of flight (TOF) measurement distance on the basis of the first time difference, (d) identify a group of the plurality of light projecting elements that emits the second light emission pulse at the second light emission timing where the second time difference matches the time difference between the first light emission timing and the second light emission timing, (e) measure stereo measurement distance on the basis of a light projection angle of the light projecting element included in the identified group of the plurality of light projecting elements and a light reception angle of a light receiving element included in the group of the plurality of light receiving elements, and (f) output the TOF measurement distance as a result of the distance measurement in a case where reference measurement distance that is the TOF measurement distance or the stereo measurement distance is greater than or equal to a predetermined threshold, and output the stereo measurement distance as the result of the distance measurement in a case where the reference measurement distance is less than the predetermined threshold.

A result of distance measurement is therefore output that uses the stereo measurement method in which the distance resolution grows higher as distance is shorter in a case where the reference measurement distance falls below the predetermined threshold, that is, in the case of short distance. In a case where the reference measurement distance reaches the predetermined threshold or more, that is, in the case of long distance, a result of distance measurement is output that uses the TOF measurement method in which the distance resolution does not depend on the measurement distance. Furthermore, stereo measurement is performed by using timings at which a first light emission pulse and a second light emission pulse projected from a light projecting element are received by a light receiving element. This makes it possible to use one light projecting and receiving element to perform both TOF measurement and stereo measurement without separately providing a light projecting and receiving element for TOF measurement and a light projecting and receiving element for stereo measurement. There is thus provided a distance measuring apparatus that makes it possible to reduce cost while increasing distance resolution in the case of short distance in which measurement distance is less than predetermined distance without decreasing distance resolution in the case of long distance in which the measurement distance is greater than or equal to the predetermined distance.

Brief Description of the Drawings

Fig. 1 is a block diagram illustrating a schematic configuration of a distance measuring apparatus according to a first embodiment.

Fig. 2 is a diagram for describing a schematic configuration of a VCSEL array in Fig. 1.
Fig. 3 is a diagram for describing distance measurement that uses a TOF measurement method.
Fig. 4 is an explanatory diagram describing distance measurement that uses a stereo measurement method.
Fig. 5 is a diagram for describing a relationship between measurement distance and distance resolution for the TOF measurement method and the stereo measurement method.
Fig. 6 is a diagram for describing measurement precision of the stereo measurement method.
Fig. 7 is a timing chart illustrating a light emission timing and a light reception timing.
Fig. 8 is a flowchart exemplifying measurement processing.
Fig. 9 is a hardware configuration diagram of a control unit of the distance measuring apparatus according to the first embodiment.

Description of the Embodiments

<First Embodiment>

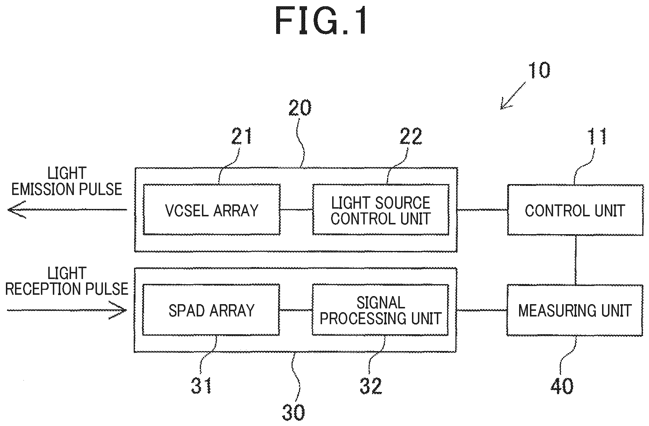

Hereinafter, a first embodiment of the present disclosure will be described with reference to the drawings. A distance measuring apparatus 10 according to the present embodiment measures the distance to an object in a predetermined measurement target region by using a TOF measurement method and a stereo measurement method. As illustrated in Fig. 1, the distance measuring apparatus 10 includes a control unit 11 which controls a light projecting unit 20 and a measuring unit 40, the light projecting unit 20 projecting a predetermined light emission pulse to a predetermined measurement target region, a light receiving unit 30 which receives, as a light reception pulse, reflection light obtained by the predetermined light emission pulse being reflected by an object in the target region, the measuring unit 40 measuring the distance from the distance measuring apparatus 10 to the object in the measurement target region on the basis of the light reception pulse received by the light receiving unit 30.

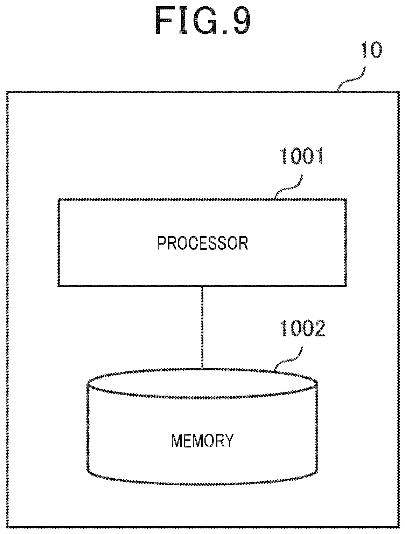

As illustrated in Fig. 9, the distance measuring apparatus 10 includes a processor 1001 and a memory 1002 as hardware components. For example, the distance measuring apparatus 10 may include a microcomputer. The microcomputer may include a central processing unit (CPU), a system bus, an input/output interface, a read only memory (ROM), a random-access memory (RAM), a non-volatile memory, and the like. The memory 1002 stores in advance programs regarding control over the light projecting unit 20 and the measuring unit 40 and a program regarding control processing that uses a result of measurement by the measuring unit 40. The hardware components may achieve the functions of the control unit 11 and the measuring unit 40.

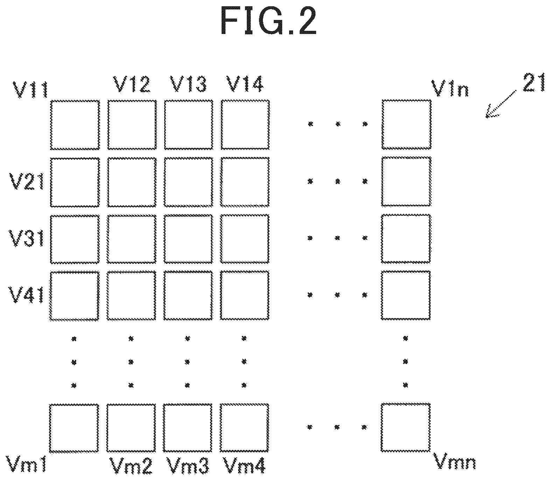

The light projecting unit 20 includes vertical cavity surface emitting laser (VCSEL) array 21 and a light source control unit 22 that controls each of the light projecting elements in the VCSEL array 21 in response to a light emission instruction from the control unit 11. As illustrated in Fig. 2, the VCSEL array 21 includes a plurality of light projecting elements V11 to Vmn disposed in an array, that is, a plurality of vertical cavity surface emitting lasers. The VCSEL array 21 is controlled by the light source control unit 22 and the plurality of light projecting elements is each capable of projecting a light emission pulse at a predetermined timing.

The light receiving unit 30 includes a SPAD array 31 and a signal processing unit 32 that processes an output signal from the SPAD array 31 and outputs the output signal to the measuring unit 40. The SPAD array 31 includes a plurality of SPADs disposed in an array as with the respective light projecting elements in the VCSEL array 21. Each of the SPADs is a light receiving element that has high response characteristics and allows for a smaller pixel size. The SPAD array 31 receives, as a plurality of light reception pulses by the respective SPADs, a plurality of pieces of reflection light that is a plurality of light emission pulses projected from the light projecting unit 20 and reflected by an object in a target region. The signal processing unit 32 outputs light reception timing information to the measuring unit 40 on the basis of pulse signals each output from the light reception pulse of each of the SPADs. It is to be noted that the signal processing unit 32 may process the pulse signals and output the processed pulse signals to the measuring unit 40.

The measuring unit 40 receives, from the control unit 11, information (also referred to as light emission timing information below) regarding a light emission timing about which the control unit 11 instructs the light projecting unit 20. In addition, the measuring unit 40 receives light reception timing information from the signal processing unit 32 of the light receiving unit 30. The measuring unit 40 performs measurement processing of measuring the distance from the distance measuring apparatus 10 to an object in a predetermined measurement target region on the basis of the received light emission timing information and light reception timing information.

In the present embodiment, in the measurement processing performed by the measuring unit 40, the distance from the distance measuring apparatus 10 to the object in the predetermined measurement target region is output by using a result of TOF measurement in the TOF measurement method and a result of stereo measurement in the stereo measurement method.

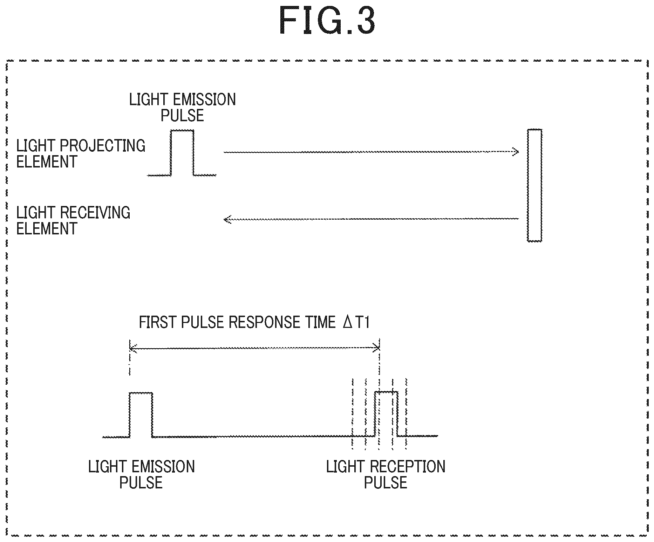

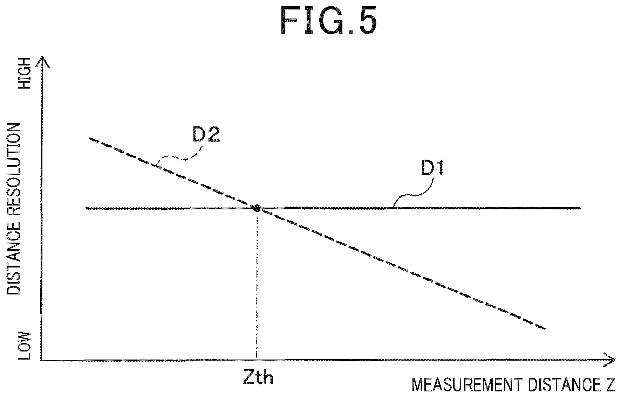

As illustrated in Fig. 3, in the TOF measurement method, distance (i.e., TOF measurement distance) is measured on the basis of the time difference (also referred to as a first pulse response time $\Delta T1$ below) between the light emission timing of a light emission pulse emitted from a light projecting element and the light reception timing of a light reception pulse by a light receiving element. The light reception pulse is reflection light of the light emission pulse. It is to be noted that the distance resolution regarding the distance measurement depends on the sampling time performance of the light receiving unit 30 in the TOF measurement method. For example, as indicated by a solid line D1 in Fig. 5, the distance resolution is constant regardless of the value of measurement distance Z.

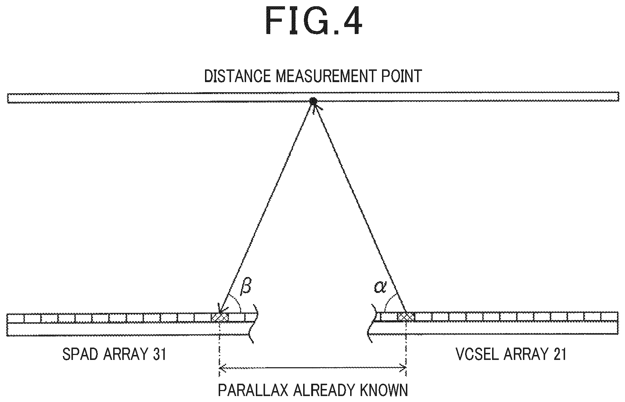

As illustrated in Fig. 4, in the stereo measurement method (e.g., active stereo measurement method), a light projecting element is identified that emits a light emission pulse corresponding to a light reception pulse received by a light receiving element. The distance (i.e., stereo measurement distance) from the distance measuring apparatus 10 to the object (i.e., distance measurement point) is measured by triangulation on the basis of a light projection angle $\alpha$ of the identified light projecting element and a light reception angle $\beta$ of the light receiving element, and the parallax known in terms of design. Specifically, the light projection angle $\alpha$ and the light reception angle $\beta$ for each combination of a light projecting element and a light receiving element are stored in the memory for each light projection pattern. The light projection angle $\alpha$ and the light reception angle $\beta$ are read out from the memory along with the parallax depending on a combination of a light receiving element that receives a light reception pulse and a light emitting element that emits a light emission pulse corresponding to the light reception pulse. In the stereo measurement method, the distance resolution regarding the distance measurement basically depends on design parameters (such as the number of pixels, the pixel size, and the light projection visual field and the light reception visual field per pixel) of the light receiving unit 30 and the light projecting unit 20 and the measurement distance Z. As exemplified by a dashed line D2 in Fig. 5, the distance resolution grows higher as the distance is shorter. It is to be noted that Fig. 4 omits an optical system such as a lens for the sake of convenience.

For example, it is assumed that the VCSEL array 21 has a light projection visual field (i.e., the light projection range in the horizontal direction) of 90° and includes 200 horizontal elements, the SPAD array 31 has a light reception visual field (i.e., the light reception range in the horizontal direction) of 90° and includes 200 horizontal elements, and a certain light projecting element in the VCSEL array 21 and a certain light receiving element in the SPAD array 31 have a parallax of 15 cm, which is the distance in the horizontal direction. The horizontal direction may be the direction vertical to the perpendicular direction and may be the direction in which the VCSEL array 21 and the SPAD array 31 are connected. In this case, the distance resolution for a stereo measurement distance of 1 m is calculated as follows.

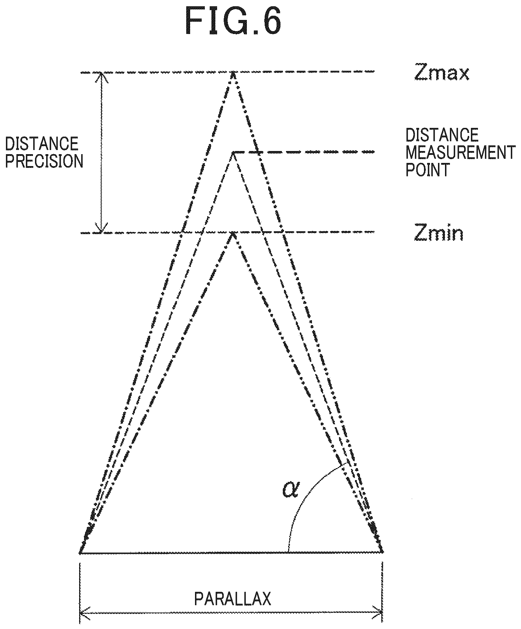

There are 200 horizontal elements for a light projection visual field (horizontal) of 90° and the precision of the light projection angle is thus 0.45°. In addition, there are 200 horizontal elements for a light reception visual field (horizontal) of 90° and the precision of the light reception angle is thus 0.45°. As exemplified in Fig. 6, the parallax is 15 cm for a distance measurement point at which the distance from the middle point between a light projecting element and a light receiving element is 1 m. The light projection angle $\alpha$ is therefore calculated by using a trigonometric function as follows.

$$\alpha = \tan^{-1}(1/0.075) = 85.7°$$

Accordingly, distance Zmax for the error upper limit is equal to measurement distance obtained in accordance with the light projection angle $\alpha$ (i.e., 85.7°) + (0.45°/2). The distance Zmax is therefore calculated as 1.05 m by using a trigonometric function. Similarly, distance Zmin for the error lower limit is equal to measurement distance obtained in accordance with the light projection angle $\alpha$ (i.e., 85.7°) - (0.45°/2). The distance Zmin is therefore calculated as 0.95 m by using a trigonometric function. The distance precision (i.e., distance Zmax - distance Zmin) is thus 10 cm. The distance precision (i.e., distance resolution) of stereo measurement distance is higher than a measurement precision of 15 cm in the TOF measurement method at a high sampling frequency of 1 GHz described above. Furthermore, the distance precision of the stereo measurement distance grows higher as the distance is shorter.

In the present embodiment, both the TOF measurement method and the stereo measurement method are therefore used. Specifically, the control unit 11 controls the light projecting unit 20 to cause all the respective light projecting elements in the VCSEL array 21 to emit first light emission pulses at the same first light emission timings and then cause all the respective light projecting elements to emit second light emission pulses at second light emission timings different between groups each including at least one of the light projecting elements in the VCSEL array 21. The first light emission pulses are light emission pulses for TOF measurement and the second light emission pulses are light emission pulses for stereo measurement.

Specifically, a predetermined time after the control unit 11 causes, for example, all the respective light projecting elements V11 to Vmn to emit the first light emission pulses at the same first light emission timings, the control unit 11 first causes the light projecting elements V11, V21, V31, ..., Vm1 in the first column to emit the second light emission pulses. A predefined time (e.g., 10 ns) after the light emission of the light projecting elements in the first column, the control unit 11 causes the light projecting elements V12, V22, V32, ..., Vm2 in the second column to emit the second light emission pulses. The predefined time after the light emission of the light projecting elements in the second column, the control unit 11 causes the light projecting elements V13, V23, V33, ..., Vm3 in the third column to emit the second light emission pulses. In this way, the control unit 11 causes all the light projecting elements to emit the second light emission pulses by shifting the second light emission timings for the respective columns of the light projecting elements on a predefined-time basis.

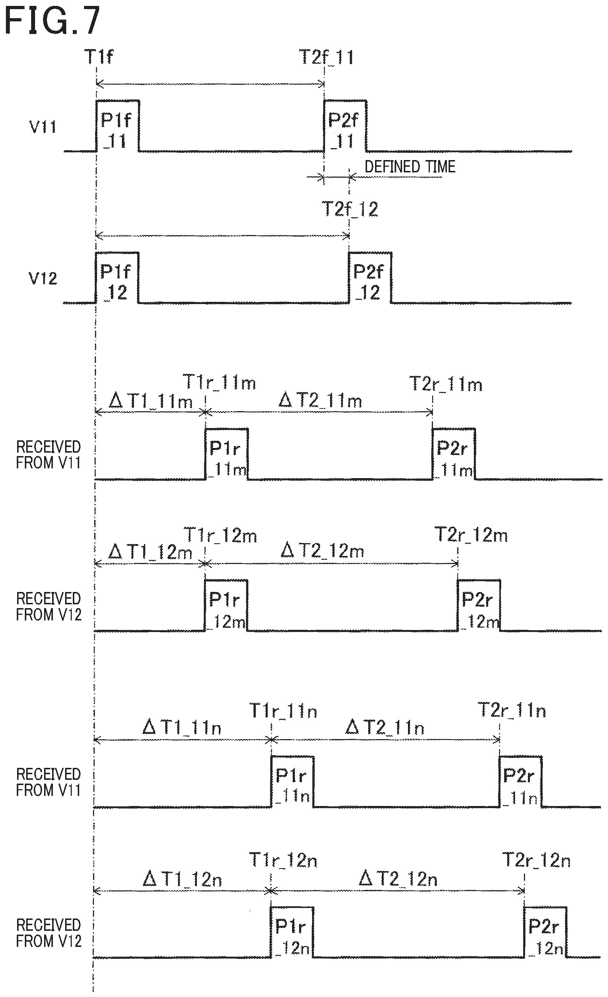

As described above, the second light emission timings are shifted for the respective columns (i.e., predetermined light emitting groups) in the VCSEL array 21 to allow the output timing of an output signal from the signal processing unit 32 of the light receiving unit 30 that receives the second light emission pulses to the measuring unit 40 to correspond to a column in the VCSEL array 21. The use of the output timing of the output signal makes it possible to identify a light projecting element that emitted a light emission pulse corresponding to a light reception pulse received by a light receiving element. Details will be described with reference to Fig. 7. Fig. 7 is a timing chart illustrating light emission timings and light reception timings. Specifically, Fig. 7 is a diagram for describing the relationships between a first light emission timing and a second light emission timing, a first light reception timing and a second light reception timing, and a first pulse response time and a second pulse response time. The first chart in Fig. 7 illustrates the light emission timings of the light projecting element V11. The second chart in Fig. 7 illustrates the light emission timings of the light projecting element V12. The third chart in Fig. 7 illustrates the light reception timings of pieces of reflection light of pieces of light emitted from the light projecting element V11, and the first pulse response time and the second pulse response time for a distance measurement point closer than the distance measurement point in the fifth chart. The fourth chart in Fig. 7 illustrates the light reception timings of pieces of reflection light of pieces of light emitted from the light projecting element V12, and the first pulse response time and the second pulse response time for a distance measurement point closer than the distance measurement point in the sixth chart. The fifth chart in Fig. 7 illustrates the light reception timings of pieces of reflection light of pieces of light emitted from the light projecting element V11, and the first pulse response time and the second pulse response time for a distance measurement point farther than the distance measurement point in the third chart. The sixth chart in Fig. 7 illustrates the light reception timings of pieces of reflection light of pieces of light emitted from the light projecting element V12, and the first pulse response time and the second pulse response time for a distance measurement point farther than the distance measurement point in the fourth chart.

For example, as exemplified by the first chart in Fig. 7, a first light emission pulse P1f_11 is emitted from the light projecting element V11 at a first light emission timing T1f and a second light emission pulse P2f_11 is then emitted at a second light emission timing T2f_11. As exemplified by the second chart in Fig. 7, a first light emission pulse P1f_12 is emitted from the light projecting element V12 at the first light emission timing T1f that is the same as that of the light projecting element V11 and a second light emission pulse P2f_12 is then emitted at a second light emission timing T2f_12 that comes the predefined time after the second light emission timing T2f 11.

In this case, as illustrated in the third chart in Fig. 7, a light receiving element that receives pieces of reflection light of the first light emission pulse P1f_11 and the second light emission pulse P2f_11 receives a first light reception pulse P1r_11m as the reflection light of the first light emission pulse P1f_11 at a light reception timing (also referred to as a first light reception timing below) T1r_11m delayed from the first light emission timing T1f depending on measurement distance Zm. The time difference between the first light emission timing T1f and the first light reception timing T1r_11m is a first pulse response time $\Delta$T1_11m.

As illustrated in the third chart in Fig. 7, after the first light reception timing T1r_11m, the same light receiving element receives a second light reception pulse P2r_11m as the reflection light of the second light emission pulse P2f_11 at a second light reception timing T2r_11m. A time difference (also referred to as a second pulse response time below for the sake of convenience) $\Delta$T2_11m between the first light reception timing T1r_11m and the second light reception timing T2r_11m is substantially equal to the time difference between the first light emission timing T1f and the second light emission timing T2f_11.

In addition, as illustrated in the fourth chart in Fig. 7, a light receiving element that receives pieces of reflection light of the first light emission pulse P1f_12 and the second light emission pulse P2f_12 receives a first light reception pulse P1r_12m as the reflection light of the first light emission pulse P1f_12 at a first light reception timing T1r_12m delayed from the first light emission timing T1f depending on measurement distance Zm. The time difference between the first light emission timing T1f and the first light reception timing T1r_12m is a first pulse response time $\Delta$T1_12m.

As illustrated in the fourth chart in Fig. 7, after the first light reception timing T1r_12m, the same light receiving element receives a second light reception pulse P2r_12m as the reflection light of the second light emission pulse P2f_12 at a second light reception timing T2r_12m. A second pulse response time $\Delta$T2_12m that is the time difference between the first light reception timing T1r_12m and the second light reception timing T2r_12m is substantially equal to the time difference between the first light emission timing T1f and the second light emission timing T2f_12.

In the third chart in Fig. 7 and the fourth chart in Fig. 7, the measurement distance to a distance measurement point at which light emission pulses (i.e., the first light emission pulse P1f_11 and the second light emission pulse P2f_11) from the light projecting element V11 are reflected and the measurement distance to a distance measurement point at which light emission pulses (the first light emission pulse P1f_12 and the second light emission pulse P2f_12) from the light projecting element V12 are reflected are the same measurement distance Zm.

Meanwhile, the fifth chart and the sixth chart in Fig. 7 are timing charts in the case of a distance measurement point having measurement distance Zn longer than that of the distance measurement point having the measurement distance Zm. Specifically, when the light projecting element V11 emits each light emission pulse as described above, a first light reception pulse P1r_11n is received at a first light reception timing T1r_11n delayed from the first light emission timing T1f depending on the measurement distance Zn as illustrated in the fifth chart in Fig. 7. After that, a second light reception pulse P2r_11n is received at a second light reception timing T2r_11n.

Similarly, when the light projecting element V12 emits each light emission pulse as described above, a first light reception pulse P1r_12n is received at a first light reception timing T1r_12n delayed from the first light emission timing T1f depending on the measurement distance Zn as illustrated in the sixth chart in Fig. 7. After that, a second light reception pulse P2r_12n is received at a second light reception timing T2r_12n.

The first pulse response time $\Delta$T1_11m illustrated in the third chart in Fig. 7 and a first pulse response time $\Delta$T1_11n illustrated in the fifth chart in Fig. 7 are different between the measurement distance Zm and the measurement distance Zn. In addition, the first pulse response time $\Delta$T1_12m illustrated in the fourth chart in Fig. 7 and a first pulse response time $\Delta$T1_12n illustrated in the sixth chart in Fig. 7 are different. In contrast, the second pulse response time $\Delta$T2_11m illustrated in the third chart in Fig. 7 and a second pulse response time $\Delta$T2_11n illustrated in the fifth chart in Fig. 7 are substantially the same because pieces of reflection light of two light emission pulses emitted from the same light projecting element V11 at the same time interval are received. Similarly, the second pulse response time $\Delta$T2_12m illustrated in the fourth chart in Fig. 7 and a second pulse response time $\Delta$T2_12n illustrated in the sixth chart in Fig. 7 are substantially the same because pieces of reflection light of two light emission pulses emitted from the same light projecting element V12 at the same time interval are received. In this way, different light receiving elements that receive light emission pulses from a light projecting element at the same second light emission timings T2f are substantially the same in the second pulse response time $\Delta$T2.

That is, the second pulse response time $\Delta$T2 has a value corresponding to a column (i.e., a predetermined light emitting group) in the VCSEL array 21. In addition, the measuring unit 40 obtains light emission timing information including the first light emission timing T1f and the second light emission timing T2f for each of the light receiving elements from the control unit 11. Here, as described above, the second pulse response time $\Delta$T2

of each light receiving element is substantially equal to the time difference between the first light emission timing T1f and the second light emission timing T2f. This allows the measuring unit 40 to identify, for each light receiving element, a light projecting element that projects the second light emission pulse P2f at the second light emission timing T2f where the second pulse response time ΔT2 is substantially equal to the difference between the first light emission timing T1f and the second light emission timing T2f. It is possible for the measuring unit 40 to measure the stereo measurement distance on the basis of the light projection angle α and the light reception angle β obtained from the association of the light projecting element identified in this way and the light receiving element, and the parallax.

As described with reference to Fig. 3, it is possible to measure TOF measurement distance for each light receiving element on the basis of the first pulse response time ΔT1. That is, in measurement processing performed by the measuring unit 40, the distance from the distance measuring apparatus 10 to an object (i.e., distance measurement point) in a predetermined measurement target region is determined for each light receiving element on the basis of TOF measurement distance and stereo measurement distance.

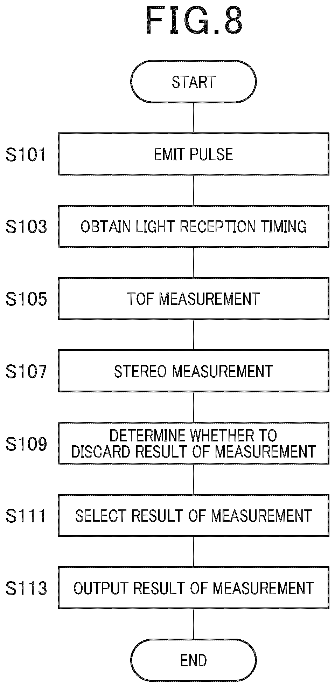

Hereinafter, measurement processing performed by the distance measuring apparatus 10 in the present embodiment will be described in detail with reference to the flowchart illustrated in Fig. 8. First, when the measurement processing is started in response to a predetermined operation or the like, the light projecting elements in the VCSEL array 21 of the light projecting unit 20 are each ready to emit light and the light receiving elements in the SPAD array 31 of the light receiving unit 30 are each ready to receive light. After the respective light projecting elements emit the first light emission pulses P1f at the first light emission timings T1f in response to a light emission instruction from the control unit 11, the second light emission pulses P2f are emitted at the second light emission timings T2f different between the columns of the light projecting elements (i.e., for the respective groups of the light projecting elements) (step S101). In the light receiving unit 30, the first light reception timing T1r at which the first light reception pulse P1r is received and the second light reception timing T2r at which the second light reception pulse P2r is received are processed by the signal processing unit 32 for each light receiving element and output to the measuring unit 40 (step S103).

When the measuring unit 40 obtains the first light reception timing T1r and the second light reception timing T2r for each light receiving element which are output from the signal processing unit 32 of the light receiving unit 30 as described above, the measuring unit 40 measures the distance for each light receiving element as follows by using the light emission timing information (i.e., the first light emission timing T1f and the second light emission timing T2f for each light receiving element) obtained from the control unit 11.

First, TOF measurement processing is performed (step S105). Specifically, TOF measurement distance is measured for each light receiving element on the basis of the first pulse response time ΔT1 that is the difference between the first light emission timing T1f and the first light reception timing T1r.

Subsequently, stereo measurement is performed (step S107). In this processing, a column of light projecting elements that emits a light emission pulse corresponding to a light reception pulse is identified for each light receiving element on the basis of the second pulse response time ΔT2 (i.e., the time difference between the first light reception timing T1r and the second light reception timing T2r) and the difference between the first light emission timing T1f and the second light emission timing T2f. The stereo measurement distance is measured on the basis of the light projection angle α and the light reception angle β obtained from the association of the light projecting element identified in this way and the light receiving element, and the parallax.

As described above, when the TOF measurement distance and the stereo measurement distance are measured for each light receiving element, discard determination processing is performed on results of the measurement (step S109). In other words, processing of deleting measurement distance that is highly likely to be incorrect measurement distance is performed. Specifically, in a case where the difference between the TOF measurement distance and the stereo measurement distance reaches a predetermined distance difference or more, at least any one of them is highly likely to be incorrect measurement distance because of the influence of noise or the like in the measurement. Both the TOF measurement distance and the stereo measurement distance are therefore discarded in this case. In this way, none of the TOF measurement distance and the stereo measurement distance are output for a light receiving element for which the difference between the TOF measurement distance and the stereo measurement distance reaches the predetermined distance difference or more because both the measurement distances are different greatly. This makes it possible to prevent a result of incorrect distance measurement from being output. It is to be noted that the second light reception pulse P2r used for stereo measurement is not received in some cases as the measurement distance is longer. The stereo measurement distance is not therefore measured in some cases. In such a case, the TOF measurement distance is not discarded, but may be output as a result of the distance measurement.

Measurement result selection processing is then performed (step S111). Specifically, any one of the TOF measurement distance and the stereo measurement distance is selected for each light receiving element as a result of the distance measurement. As illustrated in Fig. 5, the stereo measurement distance is higher than the TOF measurement distance in distance resolution in the case of short distance and the TOF measurement distance is higher than the stereo measurement distance in distance resolution in the case of long distance. Distance (i.e., boundary point) in which the distance resolution of the TOF measurement distance and the distance resolution of the stereo measurement distance are equal in terms of design is used as a predetermined distance threshold Zth. In addition, the TOF measurement distance having substantially constant distance resolution regardless of measurement distance may be used as reference measurement distance. In a case where the reference measurement distance reaches the predetermined distance threshold Zth or more, the TOF measurement distance is selected as a result of the distance measurement. In a case where the reference measurement distance falls below the predetermined distance threshold Zth, the stereo measurement distance is selected as a result of the distance measurement. This makes it possible to increase the distance measurement precision. It is to be noted that the stereo measurement distance may be used as the reference measurement distance.

As described above, when a result of measurement is selected for each light receiving element, output processing of outputting a result of the distance measurement is performed (step S113). Specifically, the selected result of the distance measurement is output for each light receiving element and the measurement processing comes to an end.

As described above, in the distance measuring apparatus 10 according to the present embodiment, the control unit 11 controls the light projecting unit 20 to cause all the plurality of light projecting elements to emit the first light emission pulses P1f at the same first light emission timings T1f and then cause at least some of the plurality of light projecting elements to emit the second light emission pulses P2f at the second light emission timings T2f different from those of the other light projecting elements. The measuring unit 40 measures TOF measurement distance for each light receiving element on the basis of the first pulse response time $\Delta T1$. The measuring unit 40 identifies a light projecting element on the basis of the second light emission timing T2f where the second pulse response time $\Delta T2$ is equal to the time difference between the first light emission timing T1f and the second light emission timing T2f. The measuring unit 40 measures the stereo measurement distance on the basis of the light projection angle $\alpha$ and the light reception angle $\beta$ obtained from the association of the identified light projecting element and the light receiving element, and the parallax. The measuring unit 40 outputs the TOF measurement distance as a result of the distance measurement in a case where the reference measurement distance out of the TOF measurement distance and the stereo measurement distance is greater than or equal to the predetermined distance threshold Zth, and outputs the stereo measurement distance as the result of the distance measurement in a case where the reference measurement distance is less than the predetermined distance threshold Zth.

In other words, the distance measuring apparatus 10 according to the present embodiment includes: the plurality of light projecting elements 21 configured to project respective light emission pulses to a measurement target region; the plurality of light receiving elements 31 configured to receive, as a plurality of light reception pulses, a plurality of the respective light emission pulses transmitted by the plurality of light projecting elements 21 and reflected by an object in the measurement target region; the control unit 11 configured to control the plurality of light projecting elements; and the measuring unit 40 configured to perform distance measurement in the measurement target region on the basis of the plurality of light reception pulses received by the plurality of light receiving elements 31. The control unit 11 is configured to cause the plurality of respective light projecting elements 21 to emit the first light emission pulses P1f at the first light emission timings T1f and then cause the plurality of respective light projecting elements 21 to emit the second light emission pulses P2f at the second light emission timings T2f, the first light emission timings T1f are identical for all the plurality of light projecting elements 21, and the second light emission timings T2f are different between groups each including at least one of the plurality of light projecting elements 21. The measuring unit 40 is configured to, for each of the groups of the plurality of light receiving elements 31, (a) measure the first time difference $\Delta T1$ between the first light emission timing T1f and the first light reception timing T1r and, the group of the plurality of light receiving elements 31 receiving the first light reception pulse P1r corresponding to the first light emission pulse P1f at the first light reception timing T1r, (b) measure the second time difference $\Delta T2$ between the first light reception timing T1r and the second light reception timing T2r, the group of the plurality of light receiving elements 31 receiving the second light reception pulse P2r corresponding to the second light emission pulse P2f at the second light reception timing T2r, (c) measure time of flight (TOF) measurement distance on the basis of the first time difference $\Delta T1$, (d) identify a group of the plurality of light projecting elements 21 that emits the second light emission pulse P2f at the second light emission timing T2f where the second time difference $\Delta T2$ matches the time difference between the first light emission timing T1f and the second light emission timing T2f, (e) measure stereo measurement distance on the basis of the light projection angle $\alpha$ of the light projecting element included in the identified group of the plurality of light projecting elements 21 and a light reception angle $\beta$ of a light receiving element included in the group of the plurality of light receiving elements 31, and (f) output the TOF measurement distance as a result of the distance measurement in a case where reference measurement distance that is the TOF measurement distance or the stereo measurement distance is greater than or equal to the predetermined threshold Zth, and output the stereo measurement distance as the result of the distance measurement in a case where the reference measurement distance is less than the predetermined threshold Zth.

A result of the distance measurement is therefore output that uses the stereo measurement method in which the distance resolution grows higher as distance is shorter in a case where the reference measurement distance falls below the predetermined distance threshold Zth, that is, in the case of short distance. In a case where the reference measurement distance reaches the predetermined distance threshold Zth or more, that is, in the case of long distance, a result of the distance measurement is output that uses the TOF measurement method in which the distance resolution does not depend on the measurement distance. Furthermore, stereo measurement is performed by using timings at which the first light emission pulse P1f and the second light emission pulse P2f projected from the light projecting unit 20 are received by the light receiving unit 30. This makes it possible to use the one light projecting unit 20 and the one light receiving unit 30 to perform both TOF measurement and stereo measurement without separately providing a light projecting and receiving unit for TOF measurement and a light projecting and receiving unit for stereo measurement. The distance measuring apparatus 10 is thus provided that makes it possible to reduce cost while increasing distance resolution in short distance in which measurement distance is less than predetermined distance without decreasing distance resolution in the case of long distance in which the measurement distance is greater than or equal to the predetermined distance. For example, it is possible to achieve the distance measuring apparatus 10 with a set of the light projecting unit 20 and the light receiving unit 30.

In addition, in the present embodiment, the light receiving element is a SPAD. The SPAD has high response characteristics and allows for a smaller pixel size and it is thus possible to further increase the distance resolution regarding the distance measurement. In other words, it is possible to further increase the measurement precision. It is to be noted that the light receiving unit 30 is not limited to the SPAD array 31 in which SPADs are disposed in an array and may include other light receiving elements. For example, a plurality of various light receiving elements corresponding to a use environment or the like of the distance measuring apparatus 10 may be disposed to correspond to a plurality of light projecting elements of the light projecting unit 20.

In addition, in the present embodiment, in a case where the difference between TOF measurement distance and stereo measurement distance reaches the predetermined distance difference or more, the measuring unit 40 discards the TOF measurement distance and the stereo measurement distance and does not output any result of the distance measurement for each light receiving element.

In this way, none of the TOF measurement distance and the stereo measurement distance are output for a light receiving element for which the difference between the TOF measurement distance and the stereo measurement distance reaches the predetermined distance difference or more because both the measurement distances are different greatly. This makes it possible to prevent a result of incorrect distance measurement from being output.

As a modification example of the present embodiment, the measuring unit 40 may output information regarding the difference between TOF measurement distance and stereo measurement distance for each light receiving element as information regarding the credibility of results of the distance measurement.

In a case where the TOF measurement distance and the stereo measurement distance have a small difference, it is highly likely that those measurement distances are correctly measured and results of the distance measurement with high credibility are output. In contrast, in a case where the TOF measurement distance and the stereo measurement distance have a great difference, it is highly likely that at least any one of those measurement distances is incorrectly measured because of the influence of noise or the like in the measurement and results of the distance measurement with low credibility are output.

For example, in a case where a light receiving element receives an interference light pulse from a light source different from the light projecting unit 20 before the first light reception pulse P1r, the first pulse response time $\Delta T1$ and the second pulse response time $\Delta T2$ is measured on the basis of a timing before the first light reception timing T1r. Incorrect measurement distances are therefore measured in both TOF measurement and stereo measurement. In addition, in a case where a light receiving element receives the interference light pulse between the first light reception pulse P1r and the second light reception pulse P2r, the second pulse response time $\Delta T2$ is measured on the basis of a timing before the second light reception timing T2r. Incorrect measurement distance is therefore measured in stereo measurement. In addition, in a case where pieces of reflection light of light emission pulses from a plurality of respective light projecting elements are mixed and received by the same light receiving element, incorrect measurement distance is also measured in at least any one of TOF measurement and stereo measurement.

Therefore, in the modification example of the present embodiment, the difference between TOF measurement distance and stereo measurement distance is output as information regarding the credibility of results of the distance measurement. This makes it possible to increase the freedom of design of processing based on the results of the distance measurement in an apparatus in which the results of the distance measurement and the information (i.e., the information regarding the difference between the TOF measurement distance and the stereo measurement distance) regarding the credibility thereof are output. For example, a design that uses only a result of distance measurement with high reliability is possible.

It is to be noted that an embodiment according to the present disclosure is not limited to the embodiment and the modification example and may be, for example, as follows.

(1) In the embodiment, the light projecting unit 20 includes the VCSEL array 21 in which a plurality of VCSELs is disposed in an array. The light projecting unit 20 may, however, include, for example, another light projecting means capable of controlling a light emission timing for each light projecting element such as a light emitting diode (LED) array in which a plurality of LEDs is disposed in an array.

(2) In the embodiment, the control unit 11 changes the second light emission timings T2f for each column of light projecting elements on a predefined-time basis and controls the light projecting unit 20 to cause each column of light projecting elements to emit the second light emission pulses P2f. For example, the control unit 11 may, however, change the second light emission timings T2f for each row of light projecting elements on a predefined-time basis and control the light projecting unit 20 to cause each row of light projecting elements to emit the second light emission pulses P2f. The control unit 11 may, however, change the second light emission timings T2f for respective groups of light projecting elements defined in advance on a predefined-time basis and control the light projecting unit 20 to cause the respective groups to emit the second light emission pulses P2f. In addition, the control unit 11 may change the second light emission timings T2f for the respective light projecting elements on a predefined-time basis and control the light projecting unit 20 to cause the respective light projecting elements to emit the second light emission pulses P2f.

(3) In the embodiment, the light receiving unit 30 receives the first light reception pulse P1r and the second light reception pulse P2r. The light receiving unit 30 may, however, receive the first light reception pulse P1r for TOF measurement and another light receiving unit different from the light receiving unit 30 may receive the second light reception pulse P2r for stereo measurement. In this case, the restriction on the parallax between the light projecting unit 20 and the other light receiving unit due to the measurement precision of TOF measurement distance is eased. This makes it possible to design the greater parallax than the parallax in a case where the one light receiving unit 30 receives both the first light reception pulse P1r and the second light reception pulse P2r. It is therefore possible to increase the measurement precision of stereo measurement distance.

(4) In the embodiment, the distance from the distance measuring apparatus 10 to an object in a predetermined measurement target region is measured. For example, the distance measuring apparatus 10 may be, however, installed in a mobile object, the predetermined measurement target region may also move along with the movement of the mobile object, and the distance to an object in the moving measurement target region may be measured.

## Claims

1. A distance measuring apparatus comprising:

a plurality of light projecting elements configured to project respective light emission pulses to a measurement target region;
a plurality of light receiving elements configured to receive, as a plurality of light reception pulses, a plurality of the respective light emission pulses transmitted by the plurality of light projecting elements and reflected by an object in the measurement target region;
a control unit configured to control the plurality of light projecting elements; and
a measuring unit configured to perform distance measurement in the measurement target region on a basis of the plurality of light reception pulses received by the plurality of light receiving elements, wherein
the control unit is configured to cause the plurality of respective light projecting elements to emit first light emission pulses at first light emission timings and then cause the plurality of respective light projecting elements to emit second light emission pulses at second light emission timings, the first light emission timings are identical for all the plurality of light projecting elements, and the second light emission timings are different between groups each including at least one of the plurality of light projecting elements, and
the measuring unit is configured to, for each of the groups of the plurality of light receiving elements,

(a) measure a first time difference between the first light emission timing and a first light reception timing, the group of the plurality of light receiving elements receiving a first light reception pulse corresponding to the first light emission pulse at the first light reception timing,
(b) measure a second time difference between the first light reception timing and a second light reception timing, the group of the plurality of light receiving elements receiving a second light reception pulse corresponding to the second light emission pulse at the second light reception timing,

(c) measure time of flight (TOF) measurement distance on a basis of the first time difference,

(d) identify a group of the plurality of light projecting elements that emits the second light emission pulse at the second light emission timing where the second time difference matches the time difference between the first light emission timing and the second light emission timing,

(e) measure stereo measurement distance on a basis of a light projection angle of the light projecting element included in the identified group of the plurality of light projecting elements and a light reception angle of a light receiving element included in the group of the plurality of light receiving elements, and

(f) output the TOF measurement distance as a result of the distance measurement in a case where reference measurement distance that is the TOF measurement distance or the stereo measurement distance is greater than or equal to a predetermined threshold, and output the stereo measurement distance as the result of the distance measurement in a case where the reference measurement distance is less than the predetermined threshold.

2. The distance measuring apparatus according to claim 1, wherein each of the plurality of light receiving elements is a single photon avalanche diode (SPAD).

3. The distance measuring apparatus according to claim 1, wherein the measuring unit is configured not to output the result of the distance measurement for the light receiving element included in a group for which a difference between the TOF measurement distance and the stereo measurement distance is greater than or equal to a predetermined value among the groups of the plurality of light receiving elements.

4. The distance measuring apparatus according to claim 1, wherein the measuring unit is configured to output information regarding a difference between the TOF measurement distance and the stereo measurement distance for each of the groups of the plurality of light receiving elements.

# FIG.1

10

20

21

22

11

LIGHT
EMISSION PULSE

| VCSEL ARRAY | LIGHT SOURCE CONTROL UNIT |
|---|---|

CONTROL UNIT

LIGHT
RECEPTION PULSE

| SPAD ARRAY | SIGNAL PROCESSING UNIT |
|---|---|

MEASURING UNIT

31

32

40

30

# FIG.2

V11     V12   V13   V14          V1n     21

V21

V31

V41

Vm1     Vm2   Vm3   Vm4         Vmn

# FIG.3

# FIG.4

DISTANCE MEASUREMENT POINT

β    α

SPAD ARRAY 31    VCSEL ARRAY 21

PARALLAX ALREADY KNOWN

# FIG.5

# FIG.6

Zmax

DISTANCE
MEASUREMENT
POINT

DISTANCE
PRECISION

Zmin

$\alpha$

PARALLAX

# FIG.7

# FIG.8

```
        ┌──────────┐
        │  START   │
        └──────────┘
             │
S101  ┌──────────────────────────┐
      │        EMIT PULSE         │
      └──────────────────────────┘
             │
S103  ┌──────────────────────────┐
      │ OBTAIN LIGHT RECEPTION TIMING │
      └──────────────────────────┘
             │
S105  ┌──────────────────────────┐
      │      TOF MEASUREMENT      │
      └──────────────────────────┘
             │
S107  ┌──────────────────────────┐
      │     STEREO MEASUREMENT    │
      └──────────────────────────┘
             │
S109  ┌──────────────────────────┐
      │    DETERMINE WHETHER TO   │
      │ DISCARD RESULT OF MEASUREMENT │
      └──────────────────────────┘
             │
S111  ┌──────────────────────────┐
      │ SELECT RESULT OF MEASUREMENT │
      └──────────────────────────┘
             │
S113  ┌──────────────────────────┐
      │ OUTPUT RESULT OF MEASUREMENT │
      └──────────────────────────┘
             │
        ┌──────────┐
        │   END    │
        └──────────┘
```

# FIG.9

10

1001

PROCESSOR

1002

MEMORY

## INTERNATIONAL SEARCH REPORT

| International application No. |
| --- |
| **PCT/JP2023/027937** |

| A. | CLASSIFICATION OF SUBJECT MATTER |
| --- | --- |

*G01S 17/86*(2020.01)i; *G01C 3/06*(2006.01)i
FI:   G01S17/86; G01C3/06 130

According to International Patent Classification (IPC) or to both national classification and IPC

| B. | FIELDS SEARCHED |
| --- | --- |

Minimum documentation searched (classification system followed by classification symbols)

G01B 11/00 - G01B 11/30, G01C 3/00 - G01C 3/32, G01S 7/48 - G01S 7/51, G01S 17/00 - G01S 17/95

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2021/085128 A1 (SONY SEMICONDUCTOR SOLUTIONS CORP.) 06 May 2021 (2021-05-06)<br>        paragraphs [0019]-[0032], [0051], [0052], [0082]-[0099], [0131]-[0134], fig. 1, 2, 17 | 1-4 |
| A | US 2019/0049097 A1 (HEPTAGON MICRO OPTICS PTE. LTD.) 14 February 2019 (2019-02-14)<br>        paragraphs [0261]-[0264], fig. 10 | 1-4 |
| A | JP 2021-501877 A (SONY SEMICONDUCTOR SOLUTIONS CORP.) 21 January 2021 (2021-01-21)<br>        paragraphs [0101]-[0113], fig. 1-3 | 1-4 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 August 2023** | **05 September 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

### INTERNATIONAL SEARCH REPORT
**Information on patent family members**

International application No.

**PCT/JP2023/027937**

| Patent document cited in search report | Publication date (day/month/year) | Patent family member(s) | Publication date (day/month/year) |
|---|---|---|---|
| WO 2021/085128 A1 | 06 May 2021 | (Family: none) | |
| US 2019/0049097 A1 | 14 February 2019 | WO 2017/131585 A1 CN 108779905 A | |
| JP 2021-501877 A | 21 January 2021 | US 2020/0241140 A1 paragraphs [0109]-[0121], fig. 1-3 WO 2019/063738 A1 CN 111164459 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019158737 A